# EUROPEAN PATENT APPLICATION

(11) **EP 2 902 089 A2**
(43) Date of publication of application: **05.08.2015**
(21) Application number: 14197220.8
(22) Date of filing: 10.12.2014
(51) Int. Cl.: B01D 53/14, B01D 53/50, B01D 53/75, B01D 53/78, F23J 15/04, B01D 53/56

(54) **Heat-stable salt removing system, carbon dioxide recovering system and heat-stable salt removing method**

(30) Priority: 29.01.2014 JP 2014014420
(71) Applicant: Kabushiki Kaisha Toshiba, Tokyo (JP)
(72) Inventor: Ogawa, Takashi, Tokyo (JP); Kato, Yasuhiro, Tokyo (JP); Kitamura, Hideo, Tokyo (JP)
(74) Representative: Granleese, Rhian Jane

(57) **Abstract**

According to one embodiment, a heat-stable salt removing system comprises a desulfurizing unit that causes a sulfur oxide contained in exhaust gas to be absorbed by at least part of an absorbing liquid circulating through a carbon dioxide recovering system, and that emits the exhaust gas from which the sulfur oxide is removed, the absorbing liquid. A heat-stable salt removing system comprises an anion removing unit that removes an anion from the absorbing liquid obtained after the desulfurizing unit causes the sulfur oxide to be absorbed.

## Description

### FIELD

Embodiments described herein relate generally to a heat-stable salt removing system, a carbon dioxide recovering system and a heat-stable salt removing method.

### BACKGROUND

In recent years, the problem of global warming by the greenhouse effect caused by the carbon dioxide that is a combustion product of fossil fuel has grown bigger. In the Kyoto Protocol of United Nations Framework Convention on Climate Change, the greenhouse gas emission reduction target for Japan is to achieve a reduction to 6% below 1990 between 2008 and 2012.

In such a background, for thermal electric power stations and the like that use a large amount of fossil fuel, a method in which combustion exhaust gas and an amine-based absorbing liquid are contacted and carbon dioxide in the combustion gas is separated and recovered, and a method in which the recovered carbon dioxide is stored without being released to the atmosphere are strenuously being studied.

The processes of separating and recovering the carbon dioxide from the combustion exhaust gas using such an absorbing liquid include a process of contacting the combustion gas with the absorbing liquid in an absorbing tower, and a process of heating the absorbing liquid absorbing the carbon dioxide in a regenerating tower, expelling the carbon dioxide from the absorbing liquid, and regenerating the absorbing liquid to circulate the absorbing liquid to the absorbing tower again for reuse.

During the operation of such a carbon dioxide recovering system, the absorption of sulfur oxides (SOx) and nitrogen oxides (NOx) in the exhaust gas and the reaction with oxygen therein degrade amines and thereby generate organic acids. From the organic acids, heat-stable salts that are hard to degrade in the conditions of the regenerating tower are formed.

There is a problem that amines are lost from the absorbing liquid due to carbonate ions remaining in the absorbing liquid, when the heat-stable salts accumulated in the absorbing liquid, as described above, are removed by an anion removing apparatus (for example, an electrodialyzer, an anion-exchange resin or the like).

### BRIEF DESCRIPTION OF THE DRAWINGS

FIG. 1 is a schematic configuration diagram of a carbon dioxide recovering system 100 according to a first embodiment.
FIG. 2 is a schematic configuration diagram of the electrodialyzer that is an example of the anion removing unit 3 according to the first embodiment.
FIG. 3 is a schematic configuration diagram of a carbon dioxide recovering system 200 according to the second embodiment.
FIG. 4 is a schematic configuration diagram of the passage switching unit SW2 according to the second embodiment.
FIG. 5 is a flowchart showing an example of the flow of the process of the controller CON2 according to the second embodiment.
FIG. 6 is the continuation of the flowchart in FIG. 5.

### DETAILED DESCRIPTION

According to one embodiment, a heat-stable salt removing system comprises a desulfurizing unit that causes a sulfur oxide contained in exhaust gas to be absorbed by at least part of an absorbing liquid circulating through a carbon dioxide recovering system, and that emits the exhaust gas from which the sulfur oxide is removed. A heat-stable salt removing system comprises an anion removing unit that removes an anion from the absorbing liquid obtained after the desulfurizing unit causes the sulfur oxide to be absorbed.

Hereinafter, embodiments of the present invention will be explained with reference to the drawings.

### (First Embodiment)

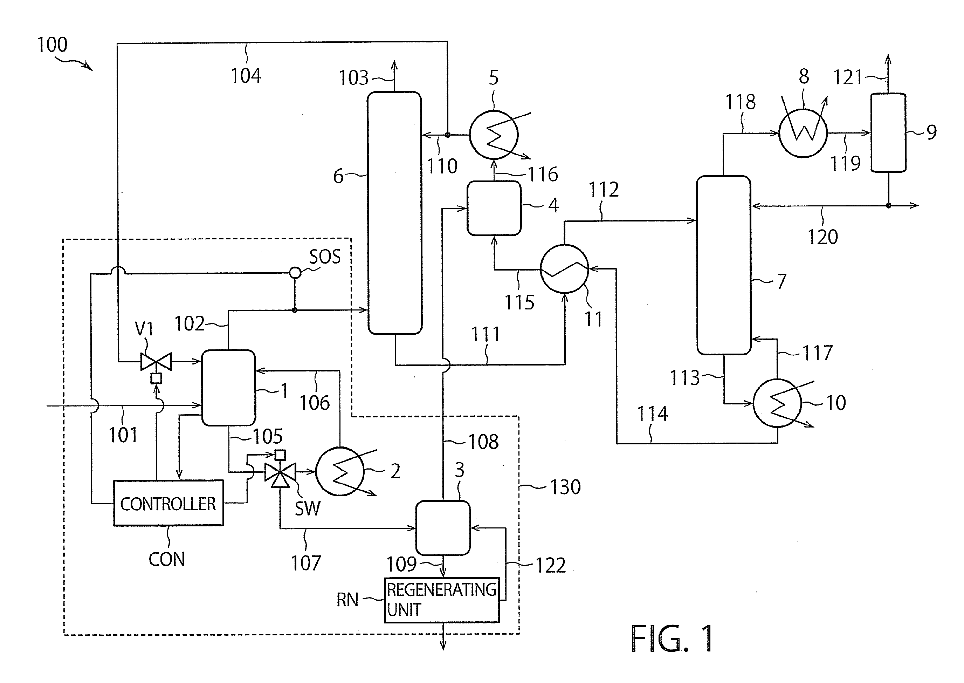

FIG. 1 is a schematic configuration diagram of a carbon dioxide recovering system 100 according to a first embodiment.

The carbon dioxide recovering system 100 includes an absorbing tower 6, and the absorbing tower 6 causes the carbon dioxide contained in a desulfurized and denitrated exhaust gas 102 that is emitted from a desulfurizing unit 1 described later to be absorbed by an absorbing liquid, and then emits the absorbing liquid containing the carbon dioxide.

Furthermore, the carbon dioxide recovering system 100 includes a regenerating tower 7, and the regenerating tower 7, to which the absorbing liquid after the absorption of the carbon dioxide (hereinafter, referred to as the rich liquid 111) is supplied from the absorbing tower 6, heats the rich liquid 111, releases and removes a carbon dioxide gas containing steam from the absorbing liquid, emits an emission gas 118 containing the carbon dioxide gas and the steam, and therewith, regenerates and emits the absorbing liquid.

For example, the desulfurized and denitrated exhaust gas 102 generated in a power generating facility such as a thermal electric power station is supplied to the lower part of the absorbing tower 6, and a combustion exhaust gas 103 in which the carbon dioxide has been removed is emitted from the top part of the absorbing tower 6. As the absorbing liquid that can absorb the carbon dioxide, an amine compound aqueous solution is used.

Furthermore, the carbon dioxide recovering system 100 includes a reboiler 10, and the reboiler 10 heats part of a lean liquid 113 stored in the regenerating tower 7, raises the temperature to generate steam, and supplies it to the regenerating tower 7.

Here, when the reboiler 10 heats the lean liquid 113, a very small amount of carbon dioxide gas is released from the lean liquid 113, and is supplied to the regenerating tower 7, along with the steam. Then, by this steam, the rich liquid 111 is heated in the regenerating tower 7, and the carbon dioxide gas is released.

Furthermore, the carbon dioxide recovering system 100 includes a regenerative heat exchanger 11, and the regenerative heat exchanger 11, between the absorbing tower 6 and the regenerating tower 7, heats the rich liquid 111 to be supplied from the absorbing tower 6 to the regenerating tower 7, using the lean liquid 114 to be supplied from the regenerating tower 7 to the absorbing tower 6 as a heat source. The heated rich liquid 111 is supplied to the regenerating tower 7, as a rich liquid 112. The regenerative heat exchanger 11 recovers the heat of the lean liquid 114, and supplies a lean liquid 115 after the heat recovery, to an amine absorbing-liquid storing tank 4.

Furthermore, the carbon dioxide recovering system 100 includes the amine absorbing-liquid storing tank 4, and the amine absorbing-liquid storing tank 4 stores the absorbing liquid that circulates through the carbon dioxide recovering system 100. Then, a fresh absorbing liquid is supplied from the upper part, and the absorbing liquid is discarded from the bottom part. Thereby, it is possible to prevent a deteriorated absorbing liquid from circulating through the carbon dioxide recovering system 100. Further, to the amine absorbing-liquid storing tank 4, a regenerated amine liquid 108, which is an amine absorbing liquid after anions are removed, is supplied from an anion removing unit 3 described later. The regenerated amine liquid 108 will be described later.

Between the amine absorbing-liquid storing tank 4 and the absorbing tower 6, an absorbing-liquid cooler 5 to cool a lean liquid 116 that is supplied from the amine absorbing-liquid storing tank 4 is provided. A lean liquid 110 cooled by the absorbing-liquid cooler 5 is supplied to the absorbing tower 6. Further, an amine absorbing liquid 104 that is part of the lean liquid 110 cooled by the absorbing-liquid cooler 5 is supplied to the desulfurizing unit 1. Here, between the amine absorbing-liquid storing tank 4 and the absorbing-liquid cooler 5, a pump (not shown in the figure) is provided.

The lean liquid 110 supplied to the absorbing tower 6 goes down toward an absorbing tower tank not shown in the figure, in the absorbing tower 6. On the other hand, the desulfurized and denitrated exhaust gas 102 supplied to the absorbing tower 6 goes up from the lower part toward the top part, in the absorbing tower 103. Thereby, the combustion exhaust gas containing the carbon dioxide and the lean liquid contact in a counter-flow manner (directly contact), in a packed bed, and the carbon dioxide is removed from the desulfurized and denitrated exhaust gas 102 and is absorbed in the lean liquid 110, so that the rich liquid 111 is generated.

The combustion exhaust gas 103 in which the carbon dioxide has been removed is emitted from the top part of the absorbing tower 6, and the lean liquid 111 is supplied to the absorbing tower tank in the absorbing tower 6, which is not shown in the figure.

Furthermore, the carbon dioxide recovering system 100 includes a condenser 9, and the condenser 9 condenses the emission gas 118 containing the carbon dioxide gas and the steam that is emitted from the regenerating tower 7, and separates the carbon dioxide gas and the generated condensate. A carbon dioxide gas 121 emitted from the condenser 9 is stored in a storing facility (not shown in the figure).

Furthermore, the carbon dioxide recovering system 100 includes a gas cooler 8, and the gas cooler 8 cools the emission gas 118 emitted from the regenerating tower 7, using a cooling water (cooling medium). The cooled emission gas 118 is supplied to the condenser 9, as an emission gas 119. Further, the condensate 120 from the condenser 9 is supplied to the top part of the regenerating tower 7 and the exterior.

Furthermore, the carbon dioxide recovering system 100 includes a heat-stable salt removing system 130. In the heat-stable salt removing system 130, an exhaust gas 101 is supplied, an exhaust port is connected with a suction port of the absorbing tower 6, a passage inlet is connected with a passage outlet of the absorbing-liquid cooler 5, and a passage outlet is connected with a passage inlet of the amine absorbing-liquid storing tank 4.

The heat-stable salt removing system 130 includes the desulfurizing unit 1, and the amine absorbing liquid 104 that is part of the lean liquid 110 emitted from the absorbing-liquid cooler 5 is supplied to the desulfurizing unit 1.

In the amine absorbing liquid 104, which is circulated and used in the carbon dioxide recovering system 100, organic acids generated by the reaction with the oxygen in the exhaust gas, or heat-stable salts by the absorption of SOx and NOx in the exhaust gas are accumulated. A valve V1 for regulating the flow rate of the amine absorbing liquid 104 is provided in a pipe that connects the absorbing-liquid cooler 5 and the desulfurizing unit 1.

Further, the heat-stable salt removing system 130 includes a SOx concentration meter SOS, and the SOx concentration meter SOS measures the sulfur oxide concentration (SOx concentration) in the exhaust gas 102 that is emitted from the desulfurizing unit 1 and is supplied to the absorbing tower 6. Then, the SOx concentration meter SOS outputs a SOx concentration signal indicating the measured SOx concentration, to a passage switching unit SW.

Furthermore, the heat-stable salt removing system 130 includes the passage switching unit SW, and a passage inlet of the passage switching unit SW is connected with a passage outlet of the desulfurizing unit 1. The passage switching unit SW is a three-way valve capable of switching between a first passage through which an amine absorbing liquid 105 is emitted from the desulfurizing unit 1 and is supplied to the desulfurizing unit 1 again and a second passage through which the amine absorbing liquid 105 is emitted from the desulfurizing unit 1 and is supplied to an anion removing unit 3 described later.

Furthermore, the heat-stable salt removing system 130 includes a controller CON, and the controller CON, in which an input is electrically connected with an output of the SOx concentration meter SOS, is electrically connected with the valve V1 and the passage switching unit SW. The controller CON controls the opening and closing of the valve V1 and the switching of the passages of the passage switching unit SW, based on the SOx concentration detected by the SOx concentration meter SOS.

Furthermore, the heat-stable salt removing system 130 includes a cooler 2, and the cooler 2 cools the amine absorbing liquid that is emitted from the desulfurizing unit 1 and is supplied to the desulfurizing unit 1 again.

Furthermore, the heat-stable salt removing system 130 includes the anion removing unit 3, and the anion removing unit 3 removes anions from an amine absorbing liquid 107 that flows in from the passage switching unit SW.

Furthermore, the heat-stable salt removing system 130 includes a regenerating unit RN, and the regenerating unit RN regenerates sodium hydroxide from a waste liquid 109 that is emitted from the anion removing unit 3, and returns a sodium hydroxide solution 122 containing the regenerated sodium hydroxide, to the anion removing unit 3.

The desulfurizing unit 1 acquires at least part of the lean liquid 110 that can absorb carbon dioxide and that circulates through the carbon dioxide recovering system 100. In more detail, the desulfurizing unit 1 acquires at least part of the absorbing liquid that is emitted from the anime absorbing-liquid storing tank 4 and is supplied to the absorbing tower 6. As an example thereof, the desulfurizing unit 1 according to the embodiment acquires the amine absorbing liquid 104, which is part of the lean liquid 110 that is emitted from the absorbing-liquid cooler 5 and is supplied to the absorbing tower 6.

The desulfurizing unit 1 causes sulfur oxides (SOx) and nitrogen oxides (NOx) contained in the exhaust gas 101 to be absorbed by the acquired amine absorbing liquid 104. Thereby, the sulfur oxides (SOx) and the nitrogen oxides (NOx) are removed from the exhaust gas 101. The desulfurizing unit 1 supplies, to the absorbing tower 6, the desulfurized and denitrated exhaust gas 102 in which the sulfur oxides (SOx) and the nitrogen oxides (NOx) have been removed. Here, as the desulfurizing unit 1, anything that causes at least sulfur oxides (SOx) to be absorbed by the amine absorbing liquid 104 may be adopted.

The desulfurizing unit 1 contacts the amine absorbing liquid 104, in a counter-flow manner, with the combustion exhaust gas 101 containing the SOx or/and the NOx, and causes the SOx or/and the NOx in the combustion exhaust gas 101 to be absorbed by the amine absorbing liquid 104, as sulfate ion, sulfite ion, nitrate ion and nitrite ion.

The desulfurizing unit 1 circulates the amine absorbing liquid 104, through the cooler 2. Thereby, the amine carbamate, carbonate ion and hydrogen carbonate ion derived from the carbon dioxide in the amine absorbing liquid 104 are released in the exhaust gas 101, as carbon dioxide, and the sulfate ion, sulfite ion, nitrate ion and nitrite ion are combined with amine with protons (that is, are protonated) so that the amine forms heat-stable salts. The exhaust gas 101 is supplied to the absorbing tower 6, as the desulfurized and denitrated exhaust gas 102.

Thereby, the desulfurizing unit 1 can supply, to the anion removing unit 3, the amine absorbing liquid 107 that has a sufficiently low CO₂ content and that contains the sulfate ion, sulfite ion, nitrate ion and nitrite ion to the limit.

Further, the desulfurizing unit 1 monitors the liquid surface level of the amine absorbing liquid in the desulfurizing unit 1. For example, the desulfurizing unit 1 outputs, to the controller CON, a liquid surface signal indicating the liquid surface level. Thereby, the controller CON can detect whether the desulfurizing unit 1 has become empty, based on the liquid surface signal.

The controller CON opens the valve V1 such that the amine absorbing liquid 104 flows in the desulfurizing unit 1. When a certain fixed amount of amine absorbing liquid has flowed in the desulfurizing unit 1, the controller CON controls the valve V1 such that it is closed. Then, the controller CON keeps the valve V1 closed, while the amine absorbing liquid circulates between the desulfurizing unit 1 and the cooler 2, and, after the circulation and before the amine absorbing liquid is supplied to the anion removing unit 3 and the desulfurizing unit 1 becomes empty. In the case of detecting that the desulfurizing unit 1 has become empty for the amine absorbing liquid based on the liquid surface signal, the controller CON controls the valve V1 such that it is opened, and thereby, the fresh amine absorbing liquid 104 flows in the desulfurizing unit 1.

Further, the controller CON controls the passage switching unit SW, based on the sulfur oxide concentration (SOx concentration) detected by the SOx concentration meter SOS. Concretely, when the sulfur oxide concentration (SOx concentration) detected by the SOx concentration meter SOS is a predetermined concentration or less, the controller CON maintains the first passage to circulate the amine absorbing liquid 104. On the other hand, when the sulfur oxide concentration (SOx concentration) detected by the SOx concentration meter SOS exceeds the predetermined concentration, the controller CON controls the passage switching unit SW such that it switches from the first passage to the second passage and emits the amine absorbing liquid 104 to the anion removing unit 3.

Thereby, while the SOx concentration in the desulfurized and denitrated exhaust gas 102 is the predetermined concentration (for example, 10ppm) or less, it is possible to circulate the amine absorbing liquid 104 through the cooler 2, and remove the SOx from the exhaust gas 101.

On the other hand, when the SOx concentration in the desulfurized and denitrated exhaust gas 102 begins to increase exceeding the predetermined concentration (for example, 10ppm), it can be regarded that the amine absorbing liquid 104 is saturated in the SOx concentration and the amine absorbing liquid 104 cannot absorb the SOx anymore. Therefore, the passage switching unit SW supplies the amine absorbing liquid 107 from the desulfurizing unit 1 to the anion removing unit 3.

Here, the CO₂ content of the amine absorbing liquid 107 to be supplied to the anion removing unit 3 preferably should be 0.1 wt% or less, and more preferably should be 0.01 wt% or less.

The anion removing unit 3 removes anions from the amine absorbing liquid 107 that is obtained after the desulfurizing unit 1 causes the sulfur oxides to be absorbed, and supplies the absorbing liquid after the anion removal, to the amine absorbing-liquid storing tank 4.

Examples of the anions include the sulfate ion, the sulfite ion, the nitrate ion, the nitrite ion and organic acid ions.

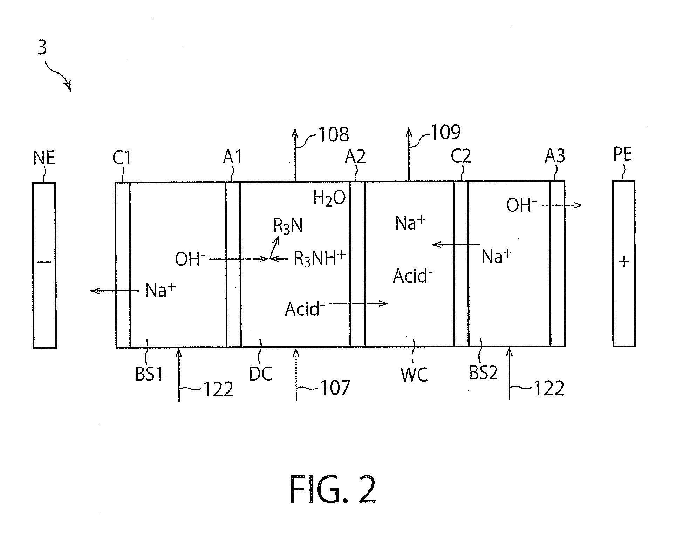

Examples of the anion removing unit 3 include an electrodialyzer, a diffusion dialyzer and an anion-exchange resin. In the embodiment, as an example, the anion removing unit 3 is an electrodialyzer in which a passage for flowing the amine absorbing liquid 107 after the desulfurization of flue gas 101 by the desulfurizing unit 1 is sandwiched between anion-exchange membranes, as shown in FIG. 2. Further, the amine absorbing liquid 107 contains an amine to be positively charged.

The amine to be positively charged is a tertiary amine, for example. The detail of the anion removing unit 3 will be described later.

The anion removing unit 3 supplies, to the amine absorbing-liquid storing tank 4, the regenerated amine liquid 108 that is the amine absorbing liquid after the anions are removed. Further, the anion removing unit 3 emits the waste liquid 109 containing the removed anions, to the regenerating unit RN.

The regenerating unit RN regenerates sodium hydroxide by mixing, with a hydroxide, sodium salts (for example, sodium sulfate) that are contained in the waste liquid 109 emitted by the anion removing unit 3, and returns the sodium hydroxide solution 122 containing the regenerated sodium hydroxide, to the anion removing unit 3.

Thereby, when the anion removing unit 3 is the electrodialyzer shown in FIG. 2, it is possible to regenerate and utilize the sodium hydroxide.

FIG. 2 is a schematic configuration diagram of the electrodialyzer that is an example of the anion removing unit 3 according to the first embodiment. The electrodialyzer includes a negative electrode NE negatively charged, and a positive electrode PE positively charged. Furthermore, the electrodialyzer includes a first cation-exchange membrane C1 to which a negative electric charge is applied by the negative electrode NE, and a first anion-exchange membrane A1 that configures a first base chamber BS1 with the first cation-exchange membrane C1. Furthermore, the electrodialyzer includes a second anion-exchange membrane A2 that configures, with the first anion-exchange membrane A1, a desalting chamber DC to which the absorbing liquid 107 after the desulfurization of flue gas 101 by the desulfurizing unit 1 is supplied, and a second cation-exchange membrane C2 that configures a waste liquid chamber WC with the second anion-exchange membrane A2. Furthermore, the electrodialyzer includes a third anion-exchange membrane A3 to which a positive electric charge is applied by the positive electrode PE and that configures a second base chamber BS2 with the second cation-exchange membrane C2.

Thereby, the first base chamber BS1, to which the sodium hydroxide solution 122 containing the sodium hydroxide is supplied from the regenerating unit RN, is partitioned by the first cation-exchange membrane C1, as one partition wall, and is partitioned by the first anion-exchange membrane A1, as the other partition wall.

The desalting chamber DC, to which the amine absorbing liquid 107 after the desulfurization of flue gas 101 by the desulfurizing unit 1 is supplied, is partitioned by the first anion-exchange membrane A1, as one partition wall, and is partitioned by the second anion-exchange membrane A2, as the other partition wall.

The waste liquid chamber WC is partitioned by the second anion-exchange membrane A2, as one partition wall, and is partitioned by the second cation-exchange membrane C2, as the other partition wall. The waste liquid 109 containing the anions that flows from the desalting chamber DC through the second anion-exchange membrane A2 is emitted from the waste liquid chamber WC to the regenerating chamber RN.

The second base chamber BS2, to which the sodium hydroxide solution is supplied from the regenerating unit RN, is partitioned by the second cation-exchange membrane C2, as one partition wall, and is partitioned by the third anion-exchange membrane A3 to which a positive electric charge is applied, as the other partition wall.

Anions Acid- in the amine absorbing liquid 107 supplied to the desalting chamber DC permeates through the second anion-exchange membrane A2 and moves to the waste liquid chamber WC. Furthermore, in the desalting chamber DC, the protonated amines in the amine absorbing liquid 107 react with the hydroxide ion in the sodium hydroxide having permeated through the first anion-exchange membrane A1, so that amines R₃N and water are generated. The regenerated amine liquid 108 containing the amines R₃N and the water is emitted from the desalting chamber DC to the amine absorbing-liquid storing tank 4.

Further, in the waste liquid chamber WC, the anions Acid-having permeated through the second anion-exchange membrane A2 and having moved from the desalting chamber DC to the waste liquid chamber WC form sodium salts, with the sodium ion in the sodium hydroxide having permeated through the second cation-exchange membrane C2. The anion removing unit 3 emits the sodium salts from the waste liquid chamber WC to the regenerating unit RN, as the waste liquid 109.

In that case, the regenerating unit RN regenerates sodium hydroxide, by mixing, with a hydroxide, sodium sulfate included in the sodium salts emitted by the anion removing unit 3, and supplies a solution containing the regenerated sodium hydroxide, to the first base chamber BS1 and the second base chamber BS2.

On that occasion, the regenerating unit RN regenerates sodium hydroxide (NaOH) from sodium sulfate (Na₂SO₄), which occupies the majority of the sodium salts in the waste liquid 109 emitted to the regenerating unit RN, by at least any one of the following reactions.

Na₂SO₄ + Ca(OH)₂ → 2NaOH + CaSO₄↓

Na₂SO₄ + Ba(OH)₂ → 2NaOH + BaSO₄↓

Na₂SO₄ + Sr(OH)₂ → 2NaOH + SrSO₄↓

Thus, the heat-stable salt removing system 130 according to the first embodiment includes the desulfurizing unit 1 to acquire at least part of the amine absorbing liquid that can absorb carbon dioxide and that circulates through the carbon dioxide recovering system 100 and to absorb the sulfur oxides contained in the exhaust gas, in the acquired amine absorbing liquid, and the anion removing unit 3 to remove the anions from the amine absorbing liquid obtained after the desulfurizing unit 1 causes the sulfur oxides to be absorbed.

Thereby, the desulfurizing unit 1 can emit carbon dioxide from the amine absorbing liquid, by absorbing the sulfur oxides in the amine absorbing liquid. Thereby, since the carbonate ion and hydrogen carbonate ion in the amine absorbing liquid are reduced, it is possible to decrease the anionized amines. Therefore, it is possible to inhibit the anionized amines from being removed in the anion removing unit 3, and it is possible to reduce the loss of the amines from the amine absorbing liquid.

Furthermore, since the carbonate ion and hydrogen carbonate ion in the amine absorbing liquid to be supplied to the anion removing unit 3 are decreased, it is possible to reduce the energy for the removal of the carbonate ion and hydrogen carbonate ion in the anion removing unit 3.

Further, the anion removing unit 3 according to the first embodiment is an electrodialyzer, and the electrodialyzer includes the negative electrode NE negatively charged, and the positive electrode PE positively charged. Furthermore, the electrodialyzer includes the first cation-exchange membrane C1 to which a negative electric charge is applied by the negative electrode NE, and the first anion-exchange membrane A1 that configures the first base chamber BS1 with the first cation-exchange membrane C1. Furthermore, the electrodialyzer includes the second anion-exchange membrane A2 that configures, with the first anion-exchange membrane A1, the desalting chamber DC to which the amine absorbing liquid 107 after the desulfurization of flue gas 101 by the desulfurizing unit 1 is supplied, and the second cation-exchange membrane C2 that configures the waste liquid chamber WC with the second anion-exchange membrane A2. Furthermore, the electrodialyzer includes the third anion-exchange membrane A3 to which a positive electric charge is applied by the positive electrode PE and that configures the second base chamber BS2 with the second cation-exchange membrane C2.

Thereby, in the process of the electro-dialysis and in the previous processes, the amine absorbing liquid and sodium hydroxide are not directly mixed, and therefore, the amines are prevented from being degraded by sodium hydroxide, and the quality of the amine absorbing liquid is maintained. Furthermore, in the process of the electro-dialysis, the sodium ion is not mixed in the amine absorbing liquid, and therefore, there is an advantage in that it is unnecessary to remove the sodium ion in the amine absorbing liquid.

Here, the heat-stable salt removing system 130 may include a precipitation tank that precipitates and separates the sulfate ion, by mixing the amine absorbing liquid 107 after the desulfurization of flue gas 101 by the desulfurizing unit 1, with a hydroxide, before the anion removing unit 3 removes the anions. Thereby, the sulfate ion is previously separated from the amine absorbing liquid 107, and therefore, it is possible to cut the electric power consumption for the electro-dialysis.

Further, when a diffusion dialyzer is used as the anion removing unit 3, the anion-exchange membrane DSV manufactured by ASAHI GLASS CO., LTD. may be used, as an example of the diffusion dialyzer. When, in a division part by the DSV membrane, the amine liquid and pure water alternately flow in a counter-flow manner, the anions move from the amine absorbing liquid to the pure water, by the concentration difference. On this occasion, hydrogen ions protonating the amines, also, move to the pure water side, simultaneously, and therefore, acids are separated from the amine absorbing liquid.

### (Second Embodiment)

Next, a second embodiment will be explained. In the heat-stable salt removing system 130 according to the first embodiment, while the desulfurizing unit 1 supplies the amine absorbing liquid to the anion removing unit 3, a fresh amine absorbing liquid 104 cannot be supplied to the desulfurizing unit 1.

In contrast, a heat-stable salt removing system 140 according to the second embodiment is provided with two tanks, and while the amine absorbing liquid is supplied from one tank to the anion removing unit 3, a fresh amine absorbing liquid is supplied from the other tank to the desulfurizing unit 1.

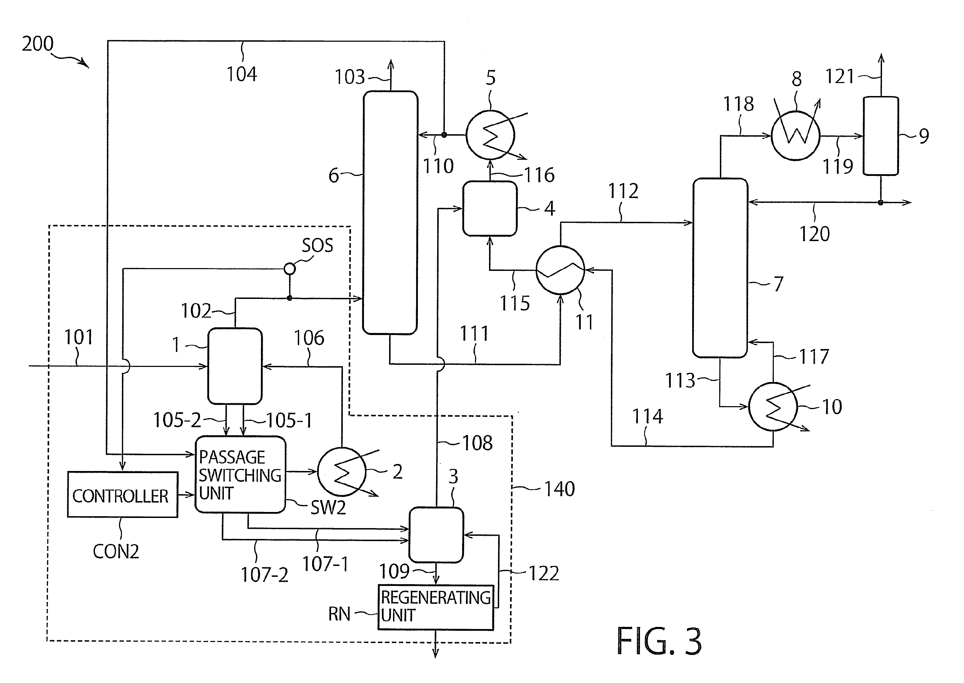

FIG. 3 is a schematic configuration diagram of a carbon dioxide recovering system 200 according to the second embodiment.

Here, for elements in common with FIG. 1, the same reference characters are assigned, the concrete explanations are omitted. In the configuration of the carbon dioxide recovering system 200 according to the second embodiment, the valve V1 is eliminated, and the heat-stable salt removing system 130 is changed into a heat-stable salt removing system 140, relative to the configuration of the carbon dioxide recovering system 100 according to the first embodiment. In the configuration of the heat-stable salt removing system 140, the passage switching unit SW is changed into a passage switching unit SW2, and the controller CON is changed into a controller CON2, relative to the configuration of the heat-stable salt removing system 130 according to the first embodiment.

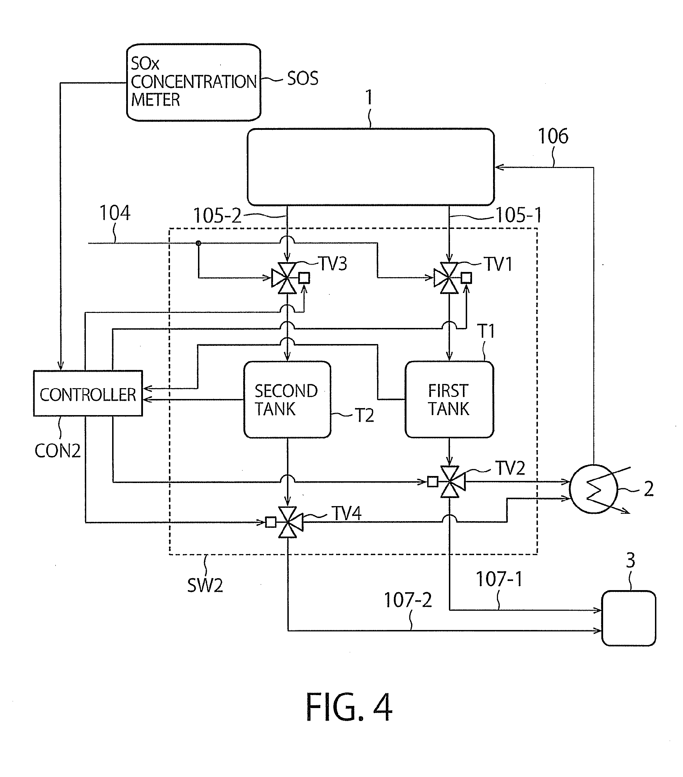

The configuration of the passage switching unit SW2 will be explained using FIG. 4. FIG. 4 is a schematic configuration diagram of the passage switching unit SW2 according to the second embodiment. The passage switching unit SW2 is provided with a first three-way valve TV1 and a first tank T1. The first three-way valve TV1 has a first passage inlet into which the amine absorbing liquid 104 supplied from the absorbing-liquid cooler 5 flows, a second passage inlet into which an amine absorbing liquid 105-1 supplied from the desulfurizing unit 1 flows, and a passage outlet from which the amine absorbing liquid 104 or the amine absorbing liquid 105-1 is emitted to the first tank T1. A passage inlet of the first tank T1 is connected with the passage outlet of the first three-way valve TV1. Further, the first tank T1 is provided with a liquid surface sensor that monitors the liquid surface level in the first tank T1, and a first liquid surface level signal indicating the liquid surface level is output to the controller CON2.

Furthermore, the passage switching unit SW2 is provided with a second three-way valve TV2 on the downstream side of the first tank T1. The second three-way valve TV2 supplies the amine absorbing liquid emitted from the first tank T1, to the cooler 2 or the anion removing unit 3. The second three-way valve TV2 has a passage inlet into which the amine absorbing liquid supplied from the first tank T1 flows, a first passage outlet from which the amine absorbing liquid is emitted to the cooler 2, and a second passage outlet from which the amine absorbing liquid is emitted to the anion removing unit 3.

Furthermore, the passage switching unit SW2 is provided with a third three-way valve TV3 and a second tank T2. The third three-way valve TV3 has a first passage inlet into which the amine absorbing liquid 104 supplied from the absorbing-liquid cooler 5 flows, a second passage inlet into which an amine absorbing liquid 105-2 supplied from the desulfurizing unit 1 flows, and a passage outlet from which the amine absorbing liquid 104 or the amine absorbing liquid 105-2 is supplied to the second tank T2. A passage inlet of the second tank T2 is connected with the passage outlet of the third three-way valve TV3. Further, the second tank T2 is provided with a liquid surface sensor that monitors the liquid surface level in the second tank T2, and a second liquid surface level signal indicating the liquid surface level is output to the controller CON2.

Furthermore, the passage switching unit SW2 is provided with a fourth three-way valve TV4 on the downstream side of the second tank T2. The fourth three-way valve TV4 supplies the amine absorbing liquid emitted from the second tank T2, to the cooler 2 or the anion removing unit 3. The fourth three-way valve TV4 has a passage inlet into which the amine absorbing liquid supplied from the second tank T2 flows, a first passage outlet from which the amine absorbing liquid is emitted to the cooler 2, and a second passage outlet from which the amine absorbing liquid is emitted to the anion removing unit 3.

The controller CON2 detects whether the first tank T1 has become empty, based on the first liquid surface signal input from the first tank T1. Further, the controller CON2 detects whether the second tank T2 has become empty, based on the second liquid surface signal input from the second tank T2.

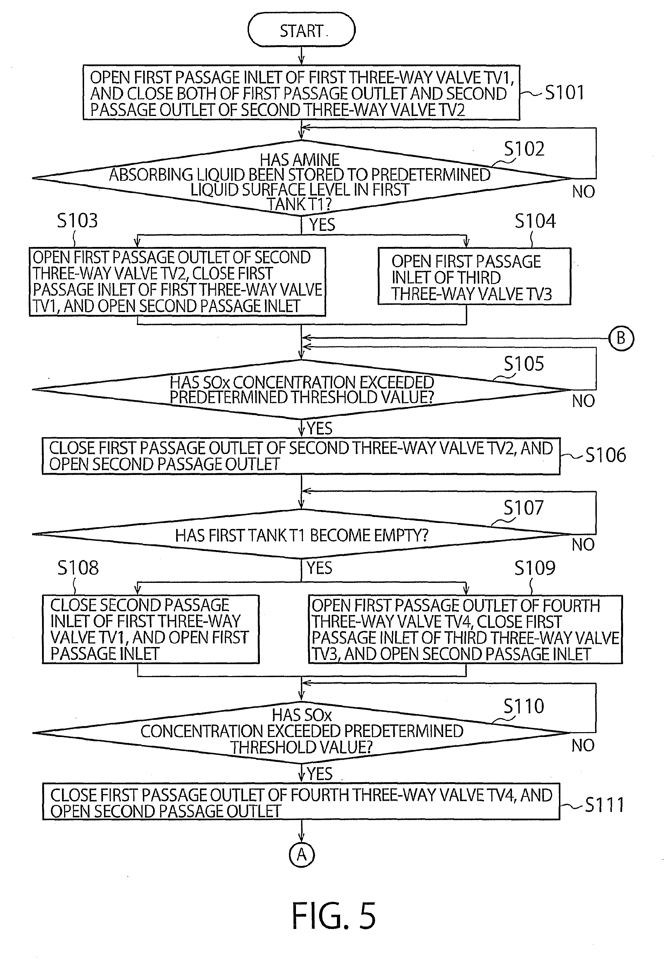

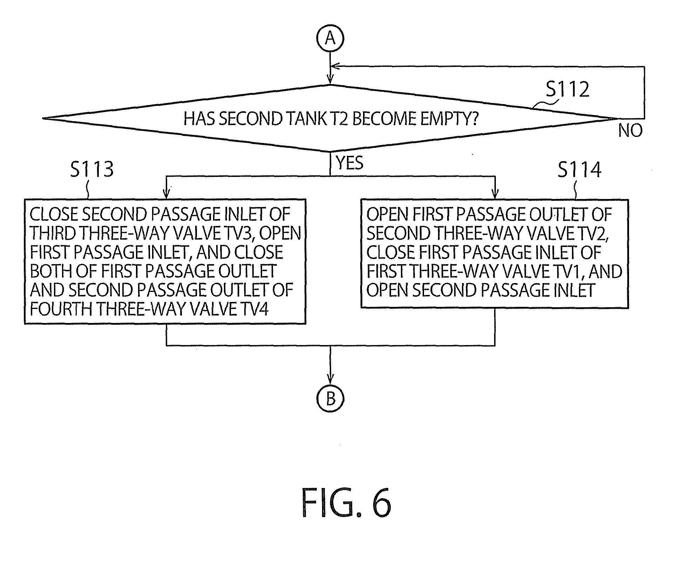

The controller CON2 controls the first three-way valve TV1, the second three-way valve TV2, the third three-way valve TV3 and the fourth three-way valve TV4, based on the SOx concentration measured by the SOx concentration meter SOS, the liquid surface level of the first tank T1, and the liquid surface level of the second tank T2, for example. In the following, an example of the control of the passage switching unit SW2 by the controller CON2 will be explained using FIG. 5 and FIG. 6.

FIG. 5 is a flowchart showing an example of the flow of the process of the controller CON2 according to the second embodiment. FIG. 6 is the continuation of the flowchart in FIG. 5.

(Step S101) The controller CON2 supplies the amine absorbing liquid 104 to the first tank T1, by opening the first passage inlet of the first three-way valve TV1, and closes both of the first passage outlet and second passage outlet of the second three-way valve TV2. Thereby, the amine absorbing liquid 104 is stored in the first tank T1.

(Step S102) The controller CON2 monitors the liquid surface level of the first tank T1, based on the first liquid surface signal, for example, and detects whether the amine absorbing liquid has been stored to a predetermined liquid surface level in the first tank T1, based on the first liquid surface signal. In the case where the amine absorbing liquid 104 has been stored to the predetermined liquid surface level (YES), the controller CON2 proceeds to step S103. On the other hand, in the case where the amine absorbing liquid 104 has not been stored to the predetermined liquid surface level (NO), the controller CON2 waits with no change.

(Step S103) In the case of detecting that the amine absorbing liquid has been stored to the predetermined liquid surface level in the first tank T1 based on the first liquid surface signal in step S102, the controller CON2 supplies the amine absorbing liquid from the first tank T1 to the cooler 2, by opening the first passage outlet of the second three-way valve TV2. Furthermore, the controller CON2 stops the supply of the amine absorbing liquid 104 to the first tank T1, by closing the first passage inlet of the first three-way valve TV1, and supplies the amine absorbing liquid 105-1 from the desulfurizing unit 1 to the first tank T1, by opening the second passage inlet.

Thereby, the amine absorbing liquid stored in the first tank T1 circulates through the second three-way valve TV2, the cooler 2, the desulfurizing unit 1 and the first three-way valve TV1. Therefore, in the desulfurizing unit 1, the amine carbamate, carbonate ion and hydrogen carbonate ion derived from the carbon dioxide in an amine absorbing liquid 106 supplied from the cooler 2 are released in the exhaust gas 101, as carbon dioxide, and the amines are protonated with the sulfate ion, sulfite ion, nitrate ion and nitrite ion, so that heat-stable salts are formed.

(Step S104) Further, in parallel with step S103, the controller CON2 supplies the amine absorbing liquid 104 to the second tank T2, by opening the first passage inlet of the third three-way valve TV3. Thereby, the amine absorbing liquid 104 is stored in the second tank T2.

(Step S105) Next, the controller CON2 judges whether the SOx concentration detected by the SOx concentration meter SOS has exceeded a predetermined threshold value. In the case where the SOx concentration has exceeded the predetermined threshold value (YES), the controller CON2 proceeds to step S106. On the other hand, in the case where the SOx concentration has not exceeded the predetermined threshold value (NO), the controller CON2 waits with no change.

(Step S106) In the case of judging that the SOx concentration has exceeded the predetermined threshold value in step S105, the controller CON2 closes the first passage outlet of the second three-way valve TV2, and opens the second passage outlet. Thereby, an amine absorbing liquid 107-1 is supplied from the first tank T1 to the anion removing unit 3.

(Step S107) Next, the controller CON2 monitors the liquid surface level of the first tank T1, based on the first liquid surface signal, and judges whether the first tank T1 has become empty, based on the first liquid surface signal. In the case of judging that the first tank T1 has become empty (YES), the controller CON2 proceeds to step S108 and step S109. On the other hand, in the case of judging that the first tank T1 has not become empty (NO), the controller CON2 waits with no change.

(Step S108) In the case of judging that the first tank T1 has become empty based on the first liquid surface signal in step S107, the controller CON2 supplies the amine absorbing liquid 104 to the first tank T1, by closing the second passage inlet of the first three-way valve TV1 and opening the first passage inlet. Furthermore, the controller CON2 closes both of the first passage outlet and second passage outlet of the second three-way valve TV2. Thereby, the amine absorbing liquid 104 is stored in the first tank T1.

(Step S109) In parallel with step S108, the controller CON2 supplies the amine absorbing liquid from the second tank T2 to the cooler 2, by opening the first passage outlet of the fourth three-way valve TV4. Furthermore, the controller CON2 stops the supply of the amine absorbing liquid 104 to the second tank T2, by closing the first passage inlet of the third three-way valve TV3, and supplies the amine absorbing liquid 105-2 from the desulfurizing unit 1 to the second tank T2, by opening the second passage inlet.

Thereby, the amine absorbing liquid stored in the second tank T2 circulates through the fourth three-way valve TV4, the cooler 2, the desulfurizing unit 1 and the second three-way valve TV2. Therefore, in the desulfurizing unit 1, the amine carbamate, carbonate ion and hydrogen carbonate ion derived from the carbon dioxide in the amine absorbing liquid 106 supplied from the cooler 2 are released in the exhaust gas 101, as carbon dioxide, and the amines are protonated with the sulfate ion, sulfite ion, nitrate ion and nitrite ion, so that heat-stable salts are formed.

(Step S110) Next, the controller CON2 judges whether the SOx concentration detected by the SOx concentration meter SOS has exceeded a predetermined threshold value. In the case where the SOx concentration detected by the SOx concentration meter SOS has exceeded the predetermined threshold value (YES), the controller CON2 proceeds to step S111. In the case where the SOx concentration detected by the SOx concentration meter SOS has not exceeded the predetermined threshold value (NO), the controller CON2 waits with no change.

(Step S111) In the case of judging that the SOx concentration detected by the SOx concentration meter SOS has exceeded the predetermined threshold value in step S110, the controller CON2 closes the first passage outlet of the fourth three-way valve TV4, and opens the second passage outlet. An amine absorbing liquid 107-2 is thereby supplied from the second tank T2 to the anion removing unit 3.

(Step S112) Next, the controller CON2 monitors the liquid surface level of the second tank T2, based on the second liquid surface signal, and judges whether the second tank T2 has become empty, based on the second liquid surface signal. In the case where the second tank T2 has become empty (YES), the controller CON2 proceeds to step S113 and step S114. In the case where the second tank T2 has not become empty (NO), the controller CON2 waits with no change.

(Step S113) In the case of judging that the second tankT2 has become empty in step S112, the controller CON2 supplies the amine absorbing liquid 104 to the second tank T2, by closing the second passage inlet of the third three-way valve TV3 and opening the first passage inlet of the third three-way valve TV3, and closes both of the first passage outlet and second passage outlet of the fourth three-way valve TV4. The amine absorbing liquid 104 is stored in the second tank T2.

(Step S114) In parallel with step S113, the controller CON2 supplies the amine absorbing liquid from the first tank T1 to the cooler 2, by opening the first passage outlet of the second three-way valve TV2. Furthermore, the controller CON2 stops the supply of the amine absorbing liquid 104 to the first tank T1, by closing the first passage inlet of the first three-way valve TV1, and supplies the amine absorbing liquid 105-1 from the desulfurizing unit 1 to the first tank T1, by opening the second passage inlet of the first three-way valve TV1. Thereby, the amine absorbing liquid 104 stored in the first tank T1 circulates through the second three-way valve TV2, the cooler 2, the desulfurizing unit 1 and the first three-way valve TV1. Thereafter, the controller CON2 returns to step S105.

Then, the controller CON2 repeats the processes in steps S105 to S114.

In the heat-stable salt removing system 130 according to the first embodiment, while the desulfurizing unit 1 supplies the amine absorbing liquid to the anion removing unit 3, the fresh amine absorbing liquid 104 cannot be supplied to the desulfurizing unit 1. In contrast, the heat-stable salt removing system 140 according to the second embodiment is provided with the two tanks, and while the amine absorbing liquid is supplied from one tank to the anion removing unit 3, the fresh amine absorbing liquid is supplied from the other tank to the desulfurizing unit 1. Thereby, compared to the first embodiment, it is possible to efficiently perform the desulfurization in the desulfurizing unit 1.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A heat-stable salt removing system comprising:
a desulfurizing unit that causes a sulfur oxide contained in exhaust gas to be absorbed by at least part of an absorbing liquid circulating through a carbon dioxide recovering system, and that emits the exhaust gas from which the sulfur oxide is removed; and
an anion removing unit that removes an anion from the absorbing liquid obtained after the desulfurizing unit causes the sulfur oxide to be absorbed.

2. The heat-stable salt removing system according to claim 1, comprising:
a concentration meter that detects a sulfur oxide concentration in the exhaust gas emitted by the desulfurizing unit;
a passage switching unit that switches a passage between a first passage and a second passage, the first passage being a passage through which the absorbing liquid is emitted from the desulfurizing unit and is supplied to the desulfurizing unit again, the second passage being a passage through which the absorbing liquid is emitted from the desulfurizing unit and is supplied to the anion removing unit; and
a controller that controls the passage switching unit based on the sulfur oxide concentration detected by the concentration meter,
wherein the controller controls the passage switching unit such that the passage switching unit maintains the first passage when the sulfur oxide concentration detected by the concentration meter is a predetermined concentration or less, and switches from the first passage to the second passage when the sulfur oxide concentration detected by the concentration meter exceeds the predetermined concentration.

3. The heat-stable salt removing system according to claim 1,
wherein the anion removing unit is an electrodialyzer.

4. The heat-stable salt removing system according to claim 3,
wherein the electrodialyzer comprises:
a negative electrode negatively charged;
a positive electrode positively charged;
a first cation-exchange membrane to which a negative electric charge is applied by the negative electrode;
a first anion-exchange membrane that configures a first base chamber with the first cation-exchange membrane;
a second anion-exchange membrane that configures a desalting chamber with the first anion-exchange membrane, the desalting chamber being a chamber to which the absorbing liquid after desulfurization of flue gas by the desulfurizing unit is supplied;
a second cation-exchange membrane that configures a waste liquid chamber with the second anion-exchange membrane; and
a third anion-exchange membrane to which a positive electric charge is applied by the positive electrode, and that configures a second base chamber with the second cation-exchange membrane.

5. The heat-stable salt removing system according to claim 4,
wherein the absorbing liquid contains an amine that is positively charged.

6. The heat-stable salt removing system according to claim 5,
wherein the amine is a tertiary amine.

7. The heat-stable salt removing system according to claim 4,
wherein the anion removing unit emits a waste liquid that contains the removed anion, and
the heat-stable salt removing system further comprises a regenerating unit that regenerates sodium hydroxide by mixing a sodium salt contained in the waste liquid emitted by the anion removing unit, with a hydroxide, and that supplies a solution containing the regenerated sodium hydroxide to the anion removing unit.

8. The heat-stable salt removing system according to claim 1,
wherein the anion removing unit is a diffusion dialyzer.

9. The heat-stable salt removing system according to claim 1,
wherein the anion removing unit is an anion-exchange resin.

10. The heat-stable salt removing system according to claim 1, further comprising
a precipitation tank that precipitates and separates a sulfate ion by mixing the absorbing liquid after desulfurization of flue gas by the desulfurizing unit, with a hydroxide, before the anion removing unit removes the anion.

11. A carbon dioxide recovering system comprising:
a desulfurizing unit that causes a sulfur oxide contained in exhaust gas to be absorbed by an absorbing liquid, and that emits the exhaust gas from which the sulfur oxide is removed;
an absorbing tower that causes carbon dioxide contained in the exhaust gas emitted from the desulfurizing unit to be absorbed by an absorbing liquid, and that emits the absorbing liquid containing the carbon dioxide;
a regenerating tower to which the absorbing liquid emitted from the absorbing tower is supplied, that removes carbon dioxide gas containing steam, from the absorbing liquid, and that regenerates and emits the absorbing liquid;
an absorbing-liquid storing tank that stores the absorbing liquid emitted by the regenerating tower; and
an anion removing unit that removes an anion from the absorbing liquid obtained after the desulfurizing unit causes the sulfur oxide to be absorbed, and that supplies the absorbing liquid after the anion removal, to the absorbing-liquid storing tank,
wherein the desulfurizing unit acquires at least part of the absorbing liquid that is emitted from the absorbing-liquid storing tank and is supplied to the absorbing tower.

12. A heat-stable salt removing method comprising:
causing a sulfur oxide contained in an exhaust gas to be absorbed by at least part of an absorbing liquid, the absorbing liquid circulating through a carbon dioxide recovering system; and
removing an anion from the absorbing liquid that absorbs the sulfur oxide.
